# EUROPÄISCHE PATENTANMELDUNG

(11) **EP 0 898 090 A2**
(43) Veröffentlichungstag der Anmeldung: **24.02.1999**
(21) Anmeldenummer: 98112870.5
(22) Anmeldetag: 10.07.1998
(51) Int. Cl.: F16C 11/06

(54) **Verfahren zur Herstellung eines Kugelzapfens, sowie Kugelzapfen für ein Kugelgelenk**

(30) Priorität: 16.08.1997 DE 19735638
(71) Anmelder: Volkswagen Aktiengesellschaft, 38436 Wolfsburg (DE)
(72) Erfinder: Ruholl, Herbert, 38100 Braunschweig (DE)

(57) **Zusammenfassung**

Die Erfindung betrifft ein Verfahren zur Herstellung eines Kugelzapfens (1) für ein Kugelgelenk, wobei der hergestellte Kugelzapfen (1) einen im wesentlichen kugelförmigen oberen Bereich (2) und einen im wesentlichen stabförmigen unteren Bereich (3) aufweist. Weiterhin betrifft die Erfindung einen Kugelzapfen (1), insbesondere hergestellt nach dem oben genannten Verfahren, wobei der kugelförmige Bereich (2) zur Bildung eines Kugelgelenks in einer Gelenkschale oder Gelenkpfanne lagerbar ist und der stabförmige Bereich (3) als Gelenkstange ausgebildet ist.

Die Kosten und der Aufwand des Verfahrens zur Herstellung des Kugelzapfens (1) sind nun dadurch verringert und der Kugelzapfen (1) selbst ist dadurch optimaler an unterschiedliche Beanspruchungen anpassbar, daß - bei dem Verfahren - ein im wesentlichen kugelförmiges Element mit einem im wesentlichen stabförmigen Element durch den Vorgang des Reibschweißens zu einem Kugelzapfen (1) entsprechend verbunden wird und - bei dem hergestellten Kugelzapfen (1) - der kugelförmige Bereich (2) eine erste Kontaktfläche (4) und der stabförmige Bereich (3) eine zweite Kontaktfläche (5) aufweist und die Kontaktflächen (4 und 5) miteinander verbunden, nämlich reibgeschweißt sind.

## Beschreibung

Die Erfindung betrifft ein Verfahren zur Herstellung eines Kugelzapfens für ein Kugelgelenk, wobei der hergestellte Kugelzapfen einen im wesentlichen kugelförmigen oberen Bereich und einen im wesentlichen stabförmigen unteren Bereich aufweist. Weiterhin betrifft die Erfindung einen Kugelzapfen mit einem im wesentlichen kugelförmigen oberen Bereich und einem im wesentlichen stabförmigen unteren Bereich, wobei der kugelförmige Bereich zur Bildung eines Kugelgelenks in einer Gelenkschale oder Gelenkpfanne lagerbar ist und der stabförmige Bereich als Gelenkstange ausgebildet ist.

Im Stand der Technik, von dem die Erfindung ausgeht, sind Kugelzapfen bekannt, die ganzeinheitlich hergestellt werden. Diese ganzeinheitlich hergestellten Kugelzapfen werden im allgemeinen entsprechend ihrer Form gegossen, geschmiedet oder gewalzt. Die so hergestellten Rohlinge weisen einen im wesentlichen kugelförmigen oberen Bereich und einen im wesentlichen stabförmigen unteren Bereich auf. Damit der als Kugelzapfen ausgebildete Rohling in einem Kugelgelenk entsprechend eingesetzt werden kann, muß dieser nach dem Guß entsprechend nachbearbeitet werden. Vorzugsweise wird der als Rohling ausgebildete Kugelzapfen gedreht, geschliffen und/oder entsprechend für den jeweiligen Einsatz gehärtet. Es ist auch grundsätzlich möglich derartig geformte Kugelzapfen zu schmieden.

Das Verfahren zur Herstellung des im Stand der Technik bekannten Kugelzapfens, der - im Endeffekt - in einem Kugelgelenk eingesetzt wird, ist nicht optimal ausgebildet. Einerseits ist das Verfahren aufwendig und teuer, denn der Kugelzapfen wird zunächst gegossen, wobei der Rohling dann entsprechend mit großem Aufwand nachbearbeitet werden muß. Der Arbeitsaufwand der Nachbearbeitung ist insbesondere durch die ungleichmäßige Form des Kugelzapfens erhöht. Weiterhin ist bei den im Stand der Technik bekannten Kugelzapfen nachteilig, da8 der kugelförmige Bereich und der stabförmige Bereich im wesentlichen aus dem gleichen Material bzw. aus der gleichen Legierung besteht. Da der kugelförmige Bereich im allgemeinen in einer Gelenkschale oder Gelenkpfanne eines Kugelgelenks lagerbar ist und der stabförmige Bereich im allgemeinen als Gelenkstange ausgebildet ist, wirken in diesen unterschiedlich geformten Bereichen unterschiedliche Kräfte mit unterschiedlichen Beanspruchungen. Um diesen unterschiedlichen Beanspruchungen gerecht zu werden, mu8 beispielsweise der kugelförmige Bereich auf eine andere Art und Weise gehärtet werden als der stabförmige Bereich. Dies erhöht wiederum den Arbeitsaufwand. Auch ist bei dem in Stand der Technik bekannten Kugelzapfen von Nachteil, daß es nicht möglich ist, beispielsweise den kugelförmigen Bereich aus einem hoch verschleißfestem Stahl herzustellen, wobei für den stabförmigen Bereich ein entsprechend nicht so verschleißfester und möglicherweise preiswerterer Stahl genommen werden könnte. Die Herstellung des bekannten Kugelzapfens wird somit um so teurer und aufwendiger, je unterschiedlicher der kugelförmige und der stabförmige Bereich fhr den jeweiligen Einsatz ausgebildet bzw. bearbeitet werden mu8.

Der Erfindung liegt daher die Aufgabe zugrunde, das bekannte Verfahren zur Herstellung eines Kugelzapfens, sowie den Kugelzapfen selbst, derart auszugestalten und weiterzubilden, da8 der Aufwand und die Kosten des Verfahrens zur Herstellung des Kugelzapfens verringert sind, wobei der hergestellte Kugelzapfen selbst optimaler an die entsprechenden Beanspruchungen angepa8t ist.

Die Aufgabe ist für das Verfahren nun dadurch gelöst, daß ein im wesentlichen kugelförmiges Element mit einem im wesentlichen stabförmigen Element durch den Vorgang des Reibschweißens zu einem Kugelzapfen entsprechend verbunden wird. Weiterhin ist die Aufgabe für den Kugelzapfen selbst dadurch gelöst, daß der kugelförmige Bereich eine erste Kontaktfläche und der stabförmige Bereich eine zweite Kontaktfläche aufweist und die Kontaktflächen miteinander verbunden, nämlich reibgeschweißt sind.

Der Erfindung liegt der Grundgedanke zugrunde, daß der kugelförmige Bereich und der stabförmige Bereich jeweils einzeln zumindest teilweise vorgefertigt werden, um dann später mit einem geeigneten Fügungsverfahren, nämlich dem Vorgang des Reibschweißens, zu einem Kugelzapfen zusammengefügt zu werden. Hierzu wird dann ein im wesentlichen kugelförmiges Element mit einem im wesentlichen stabförmigen Element entsprechend durch den Vorgang des Reibschweißens zu einem Kugelzapfen verbunden. Hierzu weist das kugelförmige Element eine erste Kontaktfläche und das stabförmige Element eine zweite Kontaktfläche auf, die miteinander verbunden werden, nämlich bei dem hergestellten Kugelzapfen dann reibgeschweißt sind. Im Ergebnis ist bei dem hergestellten Kugelzapfen die erste Kontaktfläche des kugelförmigen Bereichs mit der zweiten Kontaktfläche des stabförmigen Bereichs über den Vorgang des Reibschweißens verbunden worden. Dies hat den Vorteil, da8 das Verfahren zur Herstellung vereinfacht und damit verbilligt ist. Einerseits ist der Arbeitsaufwand, nämlich die Nachbearbeitung der einzelnen Bereiche verringert, insbesondere deswegen da die einzelnen kugel- und stabförmigen Elemente einfacher - bereits vor dem Zusammenfügen - bearbeitet werden können. Andererseits können nun für die unterschiedlichen Bereiche, nämlich für den kugelförmigen Bereich und den stabförmigen Bereich unterschiedliche Materialien bzw. Legierungen verwendet werden, so daß der kugelförmige Bereich und der stabförmige Bereich auf die in diesen Bereichen wirkenden speziellen Beanspruchungen durch die Auswahl des geeigneten Materials bzw. der geeigneten Legierung entsprechend angepaßt werden kann. Der so für den jeweiligen Einsatz hergestellte Kugelzapfen ist folglich wesentlich unaufwendiger herstellbar und zusätzlich auf die unterschiedlichen Beanspruchungen besser angepaßt.

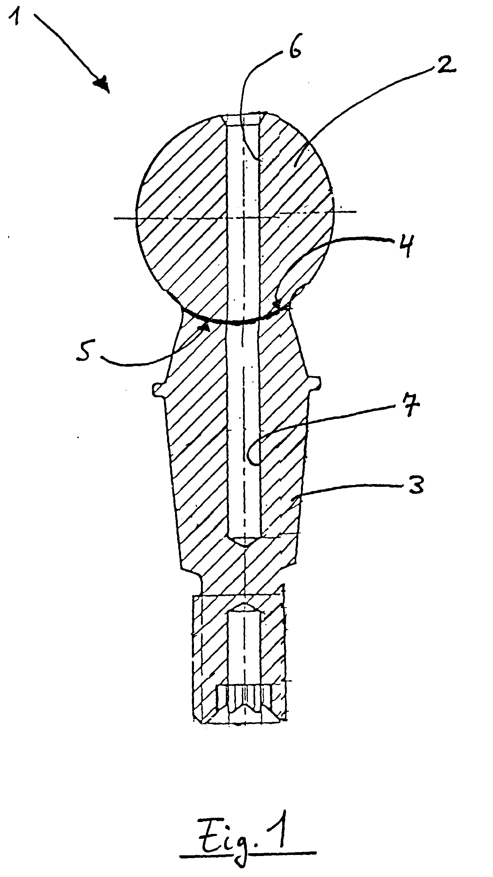

Es gibt nun eine Vielzahl von Möglichkeiten, das erfindungsgemäße Verfahren bzw. den erfindungsgemäßen Kugelzapfen in vorteilhafter Weise auszugestalten und weiterzubilden. Hierfür darf an dieser Stelle auf die dem Patentanspruch 1 und dem Patentanspruch 10 nachgeordneten Patentansprüche verwiesen werden. Im übrigen wird nun eine Ausführungsform der Erfindung anhand einer Zeichnung näher erläutert. Die einzige Figur der Zeichnung zeigt in
- FIG. 1: einen erfindungsgemäßen Kugelzapfen, hergestellt nach dem erfindungsgemäßen Verfahren, von der Seite im Schnitt in einer schematischen Darstellung.

FIG. 1 zeigt einen Kugelzapfen 1 für ein nicht dargestelltes Kugelgelenk, wobei der Kugel zapfen 1 einen im wesentlichen kugelförmigen oberen Bereich 2 und einen im wesentlichen stabförmigen unteren Bereich 3 aufweist. Zwar ist das Verfahren zur Herstellung dieses hier dargestellten Kugelzapfens 1 nicht explizit dargestellt, sondern nur der hergestellte Kugelzapfen 1 selbst.

Der kugelförmige Bereich 2 ist zur Bildung eines Kugelgelenks in einer nicht dargestellten Gelenkschale oder Gelenkpfanne lagerbar. Der stabförmige Bereich 3 kann als Gelenkstange ausgebildet werden.

Die eingangs genannten Nachteile werden nun dadurch vermieden, da8 - bei dem erfindungsgemäßen Verfahren - ein im wesentlichen kugelförmiges Element, das zu dem hier dargestellten kugelförmigen Bereich 2 korrespondiert, mit einem im wesentlichen stabförmigen Element, das zu dem stabförmigen Bereich 3 korrespondiert, durch den Vorgang des Reibschweißens zu einem Kugelzapfen 1 entsprechend verbunden wird. Hierzu weist der kugelförmige Bereich 2 eine erste Kontaktfläche 4 und der stabförmige Bereich 3 eine zweite Kontaktfläche 5 auf, wobei die Kontaktflächen 4 und 5 miteinander verbunden sind, nämlich reibgeschweißt sind. Diese so hergestellte Schweißverbindung ist in der FIG. 1 als schwarze dicke Linie schematisch dargestellt.

Bei dem erfindungsgemäßen Verfahren kann das kugelförmige Element als ein Halbzeug ausgebildet sein. Es ist ebenfalls möglich, daß das stabförmige Element als Halbzeug ausgebildet ist. Da Halbzeuge im allgemeinen sehr preiswert herzustellen sind, ist das erfindungsgemäße Verfahren im Gegensatz zu dem bisher im Stand der Technik bekannten Verfahren wesentlich preisgünstiger, wenn die entsprechenden Halbzeuge aneinandergefügt werden. Dadurch, daß der Kugelzapfen 1 nunmehr nicht mehr aus ein und demselben Material bzw. aus ein und derselben Legierung hergestellt werden muß, sondern beispielsweise zwei Halbzeuge entsprechend miteinander kombiniert werden, können die unterschiedlich geformten Bereiche, nämlich der kugelförmige und der stabförmige Bereich 2 und 3, entsprechend zu den während des jeweiligen Einsatzes auftretenden Beanspruchungen konstruktiv optimaler ausgelegt werden. Dies erhöht nicht nur die Lebensdauer des Kugelzapfens 1, sondern erhöht gleichzeitig dessen Flexibilität bezüglich seiner technischen Verwendung auf dem jeweiligen Einsatzgebiet.

Damit der Vorgang des Reibschweißens optimal durchgeführt werden kann, weist das kugelförmige und stabförmige Element zueinander entsprechend korrespondierende Kontaktflächen auf. Wie aus FIG. 1 ersichtlich, weist der kugelförmige Bereich 2 eine konvex ausgebildete erste Kontaktfläche 4 und der stabförmige Bereich 3 eine hierzu korrespondierende konkav ausgebildete zweite Kontaktfläche 5 auf. Bei dem Vorgang des Reibschweißens wird nun zwischen den Kontaktflächen durch Rotation eine Relativbewegung erzeugt, so daß das kugelförmige Element und das stabförmige Element an ihren Kontaktflächen gegeneinander gedrückt werden, und zwar sowohl während der bestehenden Relativbewegung (Reibdruck) als auch mit höherem Druck im nachfolgenden Stillstand (Stauchdruck). Durch die entsprechende Einstellung der Reibzeit kann erreicht werden, daß im Bereich der Reibschwei8verbindung - je nachdem, welche Legierungen verwendet werden - die Kohlenstoffdiffusion minimiert bzw. maximiert wird. In Abhängigkeit der verwendeten unterschiedlichen Stahlsorten kann auch der Stauchdruck so gewählt werden, daß die quantitative Auspressung der aufgekohlten Schmelze aus dem Reibschweißvorgang entsprechend gesteuert wird, insbesondere eine Graphit-/oder Lamellenstruktur des Stahls vermieden bzw. gefördert wird.

Werden nun bestimmte entsprechende Halbzeuge benutzt, um den Kugelzapfen 1 herzustellen, so können die entsprechenden Halbzeuge bearbeitet werden, um eine bestimmte Dimensionierung und/oder einen bestimmten Härtegrad zu erzielen. Das Arbeitsverfahren kann hier je nachdem, welche Schritte erforderlich sind, mit geringem Arbeitsaufwand durchgeführt werden. Der so hergestellte Kugelzapfen 1 kann für den jeweiligen Einsatz entsprechend ausgebildet werden.

Bei dem hier dargestellten Kugelzapfen 1 ist der stabförmige Bereich 3 als Gelenkstange ausgebildet. Deutlich zu erkennen ist, da8 der kugelförmige und stabförmige Bereich 2 und 3 jeweils eine Zentrierbohrung 6 und 7 aufweisen. Mit Hilfe der Zentrierbohrungen 6 und 7 ist eine gegenseitige Positionierung der Kontaktflächen 4 und 5 während des Reibschweißens möglich. Hierzu kann beispielsweise ein entsprechender Stift in die Zentrierbohrungen 6 und 7 eingeführt werden, der nach dem Reibschweißen wieder entfernt wird.

Es ist auch denkbar, daß kurz vor der Verbindung des kugelförmigen und stabförmigen Elements, die nach dem Verbinden den kugelförmigen Bereich 2 und den stabförmigen Bereich 3 bilden, auf mindestens einer Kontaktfläche ein das Reibschweißen und den Verbindungsvorgang förderndes Material aufgebracht wird. Dies kann von den unterschiedlichen verwendeten Materialien bzw. von den unterschiedlichen Legierungen abhängen.

Vorzugsweise wird der kugelförmige Bereich 3 bzw. das kugelförmige Element, insbesondere vor der Verbindung mit dem stabförmigen Element, entsprechend einsatzgehärtet. Der hierfür notwendige Härtegrad ist wiederum abhängig von den je nach Einsatzgebiet unterschiedlich auftretenden Beanspruchungen. Mit Hilfe des dargestellten Kugelzapfens 1 kann ein Kugelgelenk gebildet werden, das beispielsweise zur Aufnahme eines Radträgers eines Kraftfahrzeugs geeignet ist. Insbesondere auf diesem Gebiet ist das hier erläuterte Verfahren bzw. der hier ertäuterte Kugelzapfen 1 besonders vorteilhaft, da für die hier bei unterschiedlichen Kraftfahrzeugtypen unterschiedlich auftretenden Spannungen ein derartiger Kugelzapfen 1 mit den unterschiedlichen notwendigen, unterschiedlich dimensioniert oder gehärteten Halbzeugen besonders leicht herstellbar ist, was das Verfahren und den Kugelzapfen 1 selbst sehr preisgünstig gestaltet.

## Patentansprüche

1. Verfahren zur Herstellung eines Kugelzapfens (1) für ein Kugelgelenk, wobei der hergestellte Kugelzapfen (1) einen im wesentlichen kugelförmigen oberen Bereich (2) und einen im wesentlichen stabförmigen unteren Bereich (3) aufweist, **dadurch gekennzeichnet**, daß ein im wesentlichen kugelförmiges Element mit einem im wesentlichen stabförmigen Element durch den Vorgang des Reibschweißens zu einem Kugelzapfen (1) entsprechend verbunden wird.

2. Verfahren nach dem vorhergehenden Anspruch, **dadurch gekennzeichnet**, daß das kugelförmige Element als ein Halbzeug ausgebildet ist.

3. Verfahren nach einem der vorhergehenden Ansprüche, **dadurch gekennzeichnet**, daß das stabförmige Element als ein Halbzeug ausgebildet ist.

4. Verfahren nach einem der vorhergehenden Ansprüche, **dadurch gekennzeichnet**, daß das kugelförmige und stabförmige Element zueinander entsprechend korrespondierende Kontaktflächen aufweisen.

5. Verfahren nach einem der vorhergehenden Ansprüche, **dadurch gekennzeichnet**, daß das kugelförmige Element eine konvex ausgebildete Kontaktfläche und das stabförmige Element eine hierzu korrespondierende konkav ausgebildete Kontaktfläche aufweist.

6. Verfahren nach einem der vorhergehenden Ansprüche, **dadurch gekennzeichnet**, daß das entsprechende Halbzeug bearbeitet wird, um eine bestimmte Dimensionierung und/oder einen bestimmten Härtegrad zu erzielen.

7. Verfahren nach einem der vorhergehenden Ansprüche, **dadurch gekennzeichnet**, daß das stabförmige Element als Gelenkstange ausgebildet ist bzw. wird.

8. Verfahren nach einem der vorhergehenden Ansprüche, **dadurch gekennzeichnet**, daß das kugelförmige und das stabförmige Element jeweils eine Zentrierbohrung aufweisen, mit deren Hilfe die gegenseitige Positionierung der Kontaktflächen während des Reibschweißens, insbesondere durch Einführung eines Stiftes in die Zentrierbohrungen, erleichtert ist.

9. Verfahren nach einem der vorhergehenden Ansprüche, **dadurch gekennzeichnet**, daß kurz vor der Verbindung des kugelförmigen und stabförmigen Elementes auf mindestens einer Kontaktfläche ein das Reibschweißen und den Verbindungsvorgang förderndes Material aufgebracht wird.

10. Kugelzapfen (1), insbesondere nach einem der vorhergehenden Ansprüche 1 bis 9, für ein Kugelgelenk mit einem im wesentlichen kugelförmigen oberen Bereich (2) und einem im wesentlichen stabförmigen unteren Bereich (3), wobei der kugelförmige Bereich (2) zur Bildung eines Kugelgelenkes in einer Gelenkschale oder Gelenkpfanne lagerbar ist und der stabförmige Bereich (3) als Gelenkstange ausgebildet ist, **dadurch gekennzeichnet**, daß der kugelförmige Bereich (2) eine erste Kontaktfläche (4) und der stabförmige Bereich (3) eine zweite Kontaktfläche (5) aufweist und die Kontaktflächen (4 und 5) miteinander verbunden, nämlich reibgeschweißt sind.

11. Kugelzapfen nach Anspruch 10, **dadurch gekennzeichnet**, daß die erste Kontaktfläche (4) konvex und die zweite Kontaktfläche (5) konkav ausgebildet ist.

12. Kugelzapfen nach Anspruch 10 oder 11, **dadurch gekennzeichnet**, daß der kugelförmige und der stabförmige Bereich (2 und 3) jeweils eine zueinander korrespondierende Zentrierbohrung (6 und 7) aufweist.

13. Kugelzapfen nach einem der Ansprüche 10 bis 12, **dadurch gekennzeichnet**, daß der kugelörmige Bereich (2) einsatzgehärtet ist.

14. Kugelzapfen nach einem der Ansprüche 10 bis 13, **dadurch gekennzeichnet**, daß mit Hilfe des Kugelzapfens (1) ein Kugelgelenk gebildet ist, das zur Aufnahme eines Radträgers eines Kraftfahrzeuges geeignet ist.
